# EUROPEAN PATENT SPECIFICATION

(11) **EP 3 374 325 B1**
(45) Date of publication and mention of the grant of the patent: **07.09.2022**
(21) Application number: 16801892.7
(22) Date of filing: 24.10.2016
(51) Int. Cl.: C04B 24/26, C04B 28/06

(54) **EMULSION POLYMER TWO-COMPONENT COMPOSITIONS FOR FAST CURING, FLEXIBLE CEMENTITIOUS WATERPROOFING MEMBRANES**
ZWEIKOMPONENTIGE EMULSIONSPOLYMERZUSAMMENSETZUNGEN FÜR SCHNELL HÄRTENDE, FLEXIBLE ZEMENTARTIGE WASSERDICHTE MEMBRANE
COMPOSITIONS DE POLYMÈRE EN ÉMULSION À DEUX CONSTITUANTS POUR DES MEMBRANES D'IMPERMÉABILISATION À BASE DE CIMENT, SOUPLES, À DURCISSEMENT RAPIDE

(30) Priority: 10.11.2015 US 201562253334 P
(43) Date of publication of application: 19.09.2018
(73) Proprietor: Dow Global Technologies, LLC, Midland, MI 48674 (US); Rohm and Haas Company, Philadelphia, PA 19106 (US)
(72) Inventor: EVANS, Ann E., Collegeville, PA 19426 (US); FINCH, William C., Collegeville, PA 19426 (US); JANCO, Miroslav, Collegeville, PA 19426 (US); MULIK, Sudhir M., Collegeville, PA 19426 (US); PERELLO, Margarita, 8810 Horgen (CH); SCHMITZ, Marc, 29699 Bomlitz (DE)
(74) Representative: Beck Greener LLP
(86) International application number: PCT/US2016/058364
(87) International publication number: WO 2017/083078

(56) References cited:
- EP-A1- 1 174 447
- EP-A1- 2 767 563
- EP-A2- 1 048 676
- EP-A2- 2 077 305
- WO-A1-2008/006109
- WO-A1-2015/199984
- WO-A1-2016/001256
- JP-A- 2009 102 616
- US-A1- 2005 053 734

## Description

The present invention relates to two-component compositions for use in making cementitious waterproofing membranes comprising as component A) one or more acrylic aqueous emulsion copolymer comprising the residues of each of a reducing agent and of t-butyl hydrogen peroxide (t-butyl hydroperoxide) and having a residual (meth)acrylamide content of less than 40 ppm, preferably, less than 20 ppm, and, as a separate component B) a fast curing dry mix powder composition of a hydraulic cement and a high alumina content cement. More particularly, it relates to two component compositions wherein the A) aqueous emulsion copolymer is the copolymerization product of (i) from 60 to 89.9 wt.% of one or more nonionic (meth)acrylic monomers, (ii) from 10 to 40 wt.% of one or more vinyl aromatic monomers, (iii) from 0.1 to 2.0 wt.% of one or more monomers chosen from amides of an,β-unsaturated C₃ to C₆ carboxylic acids, and mixtures thereof with itaconic acid or methacrylic acid, all wt.%s of monomers based on the total monomer solids, wherein the aqueous emulsion copolymer has at least one residue of an ascorbic acid reducing agent and the mole ratio of t-butyl hydroperoxide to ascorbic acid reducing agent in the aqueous emulsion copolymer ranges from greater than 1.0:1 to 3.0:1, or preferably, greater than 1.0:1 to 2.5:1.

Waterproofing membranes find use as the support and sealer layer underneath tiles in bathrooms, terraces, swimming pools and water tanks. In ordinary Portland cement (OPC) or standard two-component cementitious waterproofing membrane compositions, 2 mortar layers have to be applied to achieve sufficient thickness and waterproofing quality. When using OPC in a dry mix, the time to apply the second layer is after at least 24 hours.

Faster curing waterproofing membranes can be achieved by using mortars comprising fast setting cement calcium alumina cement (CAC). However, there are multiple challenges when using emulsion polymers in fast setting cement compositions. As the wet mortar thickens very fast, the applicability and workability becomes very difficult; pot life is unacceptably short and the resulting waterproofing membrane is too rigid, and thereby lacks flexibility and often cracks so that it is not waterproof. Further, in fast setting waterproofing membrane compositions, the emulsion polymer does not provide enough flexibility to give sufficient crack bridging in dry/wet conditions. Still further, emulsion polymers known for use in making waterproofing membranes have a high residual (meth)acrylamide content, which leads to safety and handling problems. One very expensive way to solve the problem of the rigidity of the resulting waterproofing membrane would be to reduce the glass transition temperature (Tg) of the emulsion polymer, making it softer and more flexible, and to increase significantly the polymer to cement ratio. This would also increase the residual (meth)acrylamide content in the mortar and in the resulting waterproofing membrane.

An effective fast drying waterproofing membrane would enable the applicator to apply a first and a second waterproofing membrane layer and then a tile layer on the resulting waterproofing membrane within the same working day.

In addition, there remains a need for waterproofing membranes that can be used in construction applications, and applications for handling potable water or food safe applications.

U.S. Patent no. 6,423,805, to Bacho et al., discloses acrylic or vinyl aqueous emulsion polymer compositions comprising the polymerized product of a monomer mixture of one or more vinyl or acrylic monomers with from 1 to 3 wt.%, based on the total solids in the monomer mixture, of at least one monomer selected from the group consisting of amides of an α,β-unsaturated C₃ to C₆ carboxylic acid and N-vinyl lactams and at least 1 wt.% of at least one hydroxyalkyl (meth)acrylate. The compositions enable improved open time in a variety of standard cementitious compositions, such as grouts and even waterproofing membranes. The compositions comprise OPC or ordinary Portland cement and enable development of strength after 24 hours. However, nothing in Bacho et al. addresses the need for fast curing cementitious compositions which do not crack when cured to form a waterproofing membrane.

JP200910261 discloses an emulsion for admixing with cement. The emulsion contains a dispersoid which is a synthetic resin having average particle size 100 to 500nm with a coefficient of variation of ≤40%.

EP1048676 discloses incorporating a binder into a cement, the binder being a polymer composition comprising a film-forming copolymer formed by polymerisation of a monomer mixture comprising 1 to 3% of at least one monomer selected from the group of monomers consisting of amides of α,β-unsaturated C₃ to C₆ carboxylic acids and N-vinyl lactams, and at least one hydroxy-(Ci to Ca)alkyl (meth)acrylate monomer, wherein the total amount of these monomers is from 2 to 7.5% by weight of said monomer mixture.

The present inventors have sought to solve the problem of providing a composition for making a fast drying waterproofing membrane having a residual (meth)acrylamide content of below 40 ppm, while enabling acceptable mortar pot life and improved flexibility in the final cured waterproofing membrane.

### STATEMENT OF THE INVENTION

1. In accordance with the present invention, two-component compositions comprise as one component A) one or more aqueous emulsion copolymers having a residual (meth)acrylamide content of less than 40 ppm, preferably, less than 20 ppm, and, as a separate component B) a fast curing dry mix powder composition of a hydraulic cement and a high alumina content cement, wherein at least one of the one or more aqueous emulsion copolymers in component A) is the copolymerization product of (i) from 60 to 89.9 wt.% or, preferably, from 62 to 89.9 wt.% of one or more nonionic (meth)acrylic monomers, (ii) from 10 to 40 wt.% or, preferably, from 12 to 30 wt.%, of one or more vinyl aromatic monomers, (iii) from 0.1 to 3 wt.% or, preferably, from 0.75 to 2.5 wt.%, of one or more monomers chosen from amides of an,β-unsaturated C₃ to C₆ carboxylic acids, and mixtures thereof with itaconic acid or methacrylic acid, preferably, (meth)acrylamide or mixtures containing (meth)acrylamide, all wt.%s of monomers based on the total monomer solids used to make the aqueous emulsion copolymer, wherein after the copolymerization, t-butyl hydroperoxide and an ascorbic acid reducing agent are charged into the aqueous emulsion copolymer and the aqueous emulsion copolymer has a residue of an ascorbic acid reducing agent, and a residue of t-butyl hydroperoxide, wherein, the mole ratio of t-butyl hydroperoxide to ascorbic acid reducing agent that are charged into the aqueous emulsion copolymer ranges from greater than 1.0:1 to 3.0:1, or, preferably, from 1.5:1 to 2.5:1, or, more preferably, from 1.75:1 to 2.25:1.
2. In accordance with item 1 of the present invention, above, wherein at least one of the one or more aqueous emulsion copolymer of component A) has a tetrahydrofuran insoluble content of from 45 to 90 wt.%, or, preferably, from 55 to 80 wt.%, based on the total solids weight of the aqueous emulsion copolymer.
3. In accordance with any one of items 1, or 2, of the present invention, above, wherein at least one of the one or more aqueous emulsion copolymers of component A) comprises the copolymerization product of (i) one or more nonionic (meth)acrylic monomers chosen from butyl acrylate, ethyl acrylate 2-ethylhexyl acrylate, fatty C₁₂ to C₁₈ (meth)acrylates and mixtures thereof, preferably, the (i) one or more nonionic (meth)acrylic monomers being chosen from butyl acrylate, ethyl acrylate, 2-ethylhexyl acrylate, lauryl methacrylate, stearyl methacrylate, stearyl acrylate, lauryl acrylate, and mixtures thereof.
4. In accordance with any one of items 1, 2, or 3 of the present invention, above, wherein at least one of the one or more aqueous emulsion copolymers of component A) comprises the copolymerization product of (i) one or more nonionic (meth)acrylic monomers chosen from 0.1 to 10 wt.%, based on the total monomer solids used to make the aqueous emulsion copolymer, isobornyl acrylate, methyl methacrylate, ethyl methacrylate, butyl methacrylate, isobutyl methacrylate, 2-ethylhexyl methacrylate, isobornyl methacrylate, acrylonitrile, and methacrylonitrile.
5. In accordance with any one of items 1, 2, 3, or 4 of the present invention, above, wherein at least one of the one or more the aqueous emulsion copolymers of component A) is the copolymerization product of one or more monomers (i), (ii), (iii) and, in addition, (iv) one or more hydroxyalkyl (meth)acrylates, preferably, hydroxyethyl methacrylate.
6. In accordance with item 5 of the present invention, above, wherein at least one of the one or more aqueous emulsion copolymers of component A) comprises the copolymerization product of from 0.1 to 1.5 wt.%, or, preferably, from 0.25 to 1 wt.% of (iv) one or more hydroxyalkyl (meth)acrylate, all wt.%s of monomers based on total monomer solids.
7. In accordance with any one of items 1, 2, 3, 4, 5, or 6, of the present invention, above, wherein at least one of the one or more the aqueous emulsion copolymers of component A) comprises the copolymerization product of (ii) one or more vinyl aromatic monomers chosen from styrene, alkyl substituted styrene, vinyl toluene and mixtures thereof, preferably, styrene, vinyl toluene, alpha-methyl styrene, and mixtures thereof.
8. In accordance with any one of items 1, 2, 3, 4, 5, 6 or 7 of the present invention, wherein the residue of the ascorbic acid reducing agent in at least one of the one or more the aqueous emulsion copolymers of component A) is present in amounts of from 0.1 to 1.0 wt.%, based on the total monomer solids used to make the aqueous emulsion copolymer, or, up to 0.75 wt.%, or, preferably, from 0.25 to 0.5 wt.%.
9. In accordance with any one of items 1, 2, 3, 4, 5, 6 or 7 of the present invention, wherein the t-butyl hydroperoxide in at least one of the one or more the aqueous emulsion copolymers of component A) is present in amounts of from 0.2 to 2.5 wt.%, based on the total monomer solids used to make the aqueous emulsion copolymer, or, preferably, from 0.3 to 1.9 wt.%, or, preferably, up to 1.0 wt.%.
10. In accordance with any one of items 1, 2, 3, 4, 5, 6, 7, 8, or 9 of the present invention, the fast curing dry mix powder composition component B) comprises from 1 to 35 wt.% or, preferably, from 1 to 15 wt.%, or, more preferably from 8 to 15 wt.% of high alumina content cement, based on total solids in component B).
11. In accordance with any of items 1, 2, 3, 4, 5, 6, 7, 8, 9 or 10, of the present invention, the fast curing dry mix powder composition component B) comprises from 0 to 15 wt. %, or, preferably, 0.3 to 10 wt. %, or, more preferably, 1.0 wt. % or more of calcium sulfate, based on the total solids in component B).
12. In accordance with any one of items 1 to 11, of the present invention, above, wherein the two-component composition comprises from 10 to 60 wt.% or, preferably, from 20 to 50 wt.%, or, more preferably, from 25 to 40 wt.% as solids of the one or more aqueous emulsion copolymer of component A), based on the total solids content of the composition.
13. In accordance with any one of items 1 to 12 of the present invention, the fast curing dry mix powder composition component B) comprises from 15 to 65 wt.% or, preferably, 18 to 50 wt.%, hydraulic cement, such as ordinary portland cement.
14. In accordance with any one of items 1 to 13 of the present invention, the fast curing dry mix powder composition component B) comprises from 30 to 85 wt.%., or, preferably, from 50 to 70 wt.% of one or more non-cementitious filler, such as sand, talc, clay or silica, based on the total solids in component B).

In another aspect of the present invention, methods of making an aqueous emulsion copolymer of component A) having a residual (meth)acrylamide content of less than 40 ppm, preferably, less than 20 ppm comprise addition polymerizing, preferably, gradual addition polymerizing, a reaction medium of a monomer mixture of (i) from 60 to 89.9 wt.% or, preferably, from 57 to 89.9 wt.% of one or more nonionic (meth)acrylic monomers, (ii) from 10 to 40 wt.% or, preferably, from 12 to 30 wt.%, of one or more vinyl aromatic monomers, (iii) from 0.1 to 3 wt.% or, preferably, from 0.75 to 2.5 wt.%, of one or more monomers chosen from amides of an,β-unsaturated C₃ to C₆ carboxylic acids, and mixtures thereof with itaconic acid or methacrylic acid, preferably, (meth)acrylamide or mixtures containing (meth)acrylamide, all wt.%s of monomers based on the total monomer solids used to make the monomer emulsion, in the presence of an initiator or a redox pair, thereby creating an exotherm and raising for a time period the temperature of the reaction medium to form an aqueous emulsion copolymer composition, after the temperature of the reaction medium stops rising, charging to the aqueous emulsion copolymer composition t-butyl hydroperoxide and a reducing agent, and, then feeding to the composition an ascorbic acid reducing agent, wherein the amount of the ascorbic acid reducing agent ranges from 0.1 to 1.0, or, preferably, from 0.1 to 0.75 wt.%, based on the total monomer solids used to make the aqueous emulsion copolymer, or, preferably, from 0.25 to 0.5 wt.% and the amount of the t-butyl hydroperoxide ranges from 0.2 to 2.5 wt.%, based on the total monomer solids used to make the aqueous emulsion copolymer, or, preferably, from 0.3 to 1.9 wt.%.

Preferably, after the temperature of the reaction medium stops rising, the above methods of making the aqueous emulsion copolymer component A) of the present invention comprise charging to the aqueous emulsion copolymer composition an amount of from 0.01 to 0.3 wt.% of an aqueous t-butyl hydrogen peroxide and from 0.01 to 0.3 wt.% of a reducing agent, each wt.% based on the total solids of the aqueous emulsion copolymer, and, then, after a time period of from 1 to 60 minutes, preferably, after a period of from 10 to 30 minutes, feeding separately over a period of from 10 to 120 minutes, or, preferably, from 45 to 75 minutes to the aqueous emulsion copolymer composition aqueous solutions of each of t-butyl hydroperoxide and an ascorbic acid reducing agent in the amounts of from 0.29 to 2.2 wt.%, or, preferably, from 0.49 to 0.99 wt.%. of t-butyl hydrogen peroxide and from 0.2 to 0.5 wt.%, or, preferably, from 0.25 to 0.5 wt.%, of the ascorbic acid reducing agent, each wt.% based on the total solids of the aqueous emulsion copolymer.

Preferably, after the temperature of the reaction medium stops rising and before adding any t-butyl hydroperoxide or reducing agent, the above methods of making the aqueous emulsion copolymer component A) of the present invention comprise holding the aqueous emulsion copolymer composition at a constant temperature for a period of from 0.2 to 60 minutes, or, more preferably, from 5 to 35 minutes after the temperature of the reaction medium stops rising.

In the methods of making the aqueous emulsion copolymer component A) of the present invention, at least one of the one or more aqueous emulsion copolymers has a tetrahydrofuran insoluble content of 45 to 90 wt.%, or, preferably, 55 to 80 wt.%, based on the total solids weight of the aqueous emulsion copolymer.

Preferably, in the methods of making the aqueous emulsion copolymer component A) of the present invention, in the monomer mixture the (i) one or more nonionic (meth)acrylic monomers is chosen from butyl acrylate, ethyl acrylate 2-ethylhexyl acrylate, and fatty C₁₂ to C₁₈ (meth)acrylates, preferably, the (i) one or more nonionic (meth)acrylic monomers being chosen from butyl acrylate, ethyl acrylate, 2-ethylhexyl acrylate, lauryl methacrylate, stearyl methacrylate, stearyl acrylate, lauryl acrylate, and mixtures thereof.

Preferably, in the methods of making the aqueous emulsion copolymer component A) of the present invention, in the monomer mixture the monomer (iii) includes the one or more amides of a,β-unsaturated C₃ to C₆ carboxylic acids, preferably, (meth)acrylamide, and, in addition, the monomer mixture includes (iv) one or more hydroxyalkyl (meth)acrylates, preferably, hydroxyethyl methacrylate.

Preferably, in the methods of making the aqueous emulsion copolymer component A) of the present invention, the amount of the (iv) one or more hydroxyalkyl (meth)acrylate is from 0.1 to 1.5 wt.%, or, preferably, from 0.25 to 1 wt.%, based on total monomer solids.

In yet another aspect of the present invention, methods of making a waterproofing membrane comprise combining components A) and B) in accordance with any one of items 1 to 14 of the present invention, above, to make a wet mortar, applying the wet mortar to a substrate and allowing the mortar to dry.

Unless otherwise indicated, all temperature and pressure units are room temperature and standard pressure (STP). All ranges recited are inclusive and combinable.

All phrases comprising parentheses denote either or both of the included parenthetical matter and its absence. For example, the phrase "(meth)acrylate" includes, in the alternative, acrylate or methacrylate.

As used herein, the phrase "aqueous" or includes water and mixtures comprising water and up to 20 wt.%, preferably, up to 10 wt.% of water-miscible solvents.

As used herein, the term "dry mix" refers to a free flowing powder comprising cement which is storage stable and which remains so because it is sufficiently dry to avoid reaction. A dry mix may include an anhydrous filler, such as calcium sulfate anhydrates so long as the hydrous filler does not cause the dry mix to set up or "block" on storage. Blocked dry mixes are no longer free flowing powders and must be discarded.

As used herein, the term "EN" refers to the European Norm, published by de Normen durch Beuth Verlag GmbH, Berlin, DE (Alleinverkauf). The term "DIN" refers to the German language version of the EN, published by Beuth Verlag GmbH.

As used herein, the term "glass transition temperature" or "T_{g}" means the quantity as measured using differential scanning calorimetry or DSC of a polymer sample from -90 °C to 150 °C at a rate of heating 10 °C per minute to generate a calorimetry curve, with the T_{g} taken at the midpoint of the inflection in the curve.

As used herein the term "setting" refers to the solidification of the plastic cement paste. See Concrete - Microstructure, Properties, & Materials, 3rd edition, P. Kumar Mehta et al., page 220. The beginning of solidification, called the initial set, marks the point in time when the paste has become unworkable. The paste does not solidify suddenly, but requires considerable time to become fully rigid. The time taken to solidify completely marks the final set.As used herein, the phrase "size exclusion chromatography" or SEC refers to methods used to compare and confirm the tetrahydrofuran insoluble contents in various aqueous emulsion copolymers as determined by the gravimetric test, described below. In SEC, soluble polymer species elute from the SEC column as a broad peak, wherein area under the peak is directly proportional to a concentration of soluble species of the polymer. Assuming that emulsion polymer compositions are the same, a smaller area under the same peak means that a given polymer is less soluble in the solvent used. In other words, smaller peak area means that sample contains a higher tetrahydrofuran insoluble content. The aqueous emulsion copolymers of the present invention when analyzed for insoluble fraction by SEC revealed an increased tetrahydrofuran insoluble content versus comparative aqueous emulsion copolymers.

As used herein, the phrase "tetrahydrofuran insoluble content" means the wt.% of an aqueous emulsion copolymer, as solids, determined gravimetrically by weighing out and dissolving about 250 mg (solids) in 50 g of tetrahydrofuran (THF) at room temperature overnight resulting in a polymer concentration of 5 mg polymer solids/g solvent (tetrahydrofuran) using a mechanical shaker. After about 18 hours in the shaker, the indicated polymer solution was filtered using a 0.45um polytetrafluorethylene (PTFE) filter with glass micro fiber (GMF) into a pre-weighed vial and the mass was of the dissolved filtrate was recorded. Usually, about 15 to 20 g of filtrate is obtained. The solvent was evaporated using a Genevac^{™} evaporator (Genevac/SP Scientific, Stone Bridge, NY) using a low boiling point program at 40 °C. The weight of the vial and of the soluble polymer fraction (solids) in the vial was recorded and the % of the soluble polymer fraction was calculated. The % of the insoluble polymer mass was calculated as 100% minus the percentage of the soluble polymer fraction.

As used herein, the phrase "total solids" refers to all non-volatiles which will remain in a dried waterproofing membrane; it thereby excludes water, volatile gases, such as ammonia, and any volatile solvents.

The term "volatile" refers to things which boil off, vaporize or are present in gaseous state under use conditions which generally comprise atmospheric pressure and outdoor ambient temperatures of from about 7 °C to about 45 °C.

As used herein, the phrase "wt.%" stands for weight percent.

The present inventors have found two-component compositions comprising an aqueous emulsion copolymer component A) comprising residues of t-butyl hydroperoxide and an ascorbic acid, preferably, isoascorbic acid, and a fast setting high alumina content cement component that cure quickly when the components are combined to give low toxicity, waterproof and flexible waterproofing membranes. The aqueous emulsion copolymers of the present invention comprise a weight ratio of residues of t-butyl hydroperoxide to ascorbic acids of from 1.1:1 to 3.0:1 and comprise at least 0.4 wt.% based on the total monomer solids used to make the aqueous emulsion copolymer, of residues of t-butyl hydroperoxide. Such aqueous emulsion copolymers have a low residual monomer content, especially for (meth)acrylamide, so that they can be used in constructing food safe conduits and other structures used for handling or transporting potable water or liquids. Further, the aqueous emulsion copolymers of the present invention have a high tetrahydrofuran insoluble content, which may be attributed to crosslinking and/or branching in the polymer chains. The resulting aqueous emulsion copolymers provide two-component waterproofing membrane compositions that enable superior elongation after water swelling, flexibility and crack bridging and crack bridging in the membrane and superior pot life in the mortar. The flexibility enables the bridging of cracks that can appear due to mechanical stress, so that waterproofing membranes can elongate over such cracks in the masonry and bridge those cracks. In the event of mechanical stress on a concrete wall that is covered with a waterproofing membrane of the present invention, the waterproofing membrane will move with the stress and cover the resulting cracks to retain a waterproof surface. The aqueous emulsion copolymers also enable fast cure so that an applicator can apply a new layer of the waterproofing membrane composition on top of a first layer of the composition after from 0.5 to 2 hours.

The aqueous emulsion copolymers of component A) of the present invention, have a residual monomer content of 200ppm, preferably less than 150 ppm. Such aqueous emulsion copolymers have an acrylamide content of 40 ppm or less to enable user safe mortars for building applications and use in applications that will come in contact with food, or potable water.

For the aqueous emulsion copolymer of the present invention, the monomer mixture comprises one or more vinyl aromatic monomers (ii) in the amount of from 10 to 40 wt.%, or, preferably, from 12 to 30 wt.%, based on the total monomer solids used to make the aqueous emulsion copolymer.

To increase the stability of the aqueous emulsion copolymer of the present invention and limit copolymerizable (meth)acrylamide content, which can result in viscosity and water potability issues, the aqueous emulsion copolymers of the present invention may comprise the copolymerization product of up to 1.5 wt.% of (iv) one or more hydroxy-(Ci to Cs) alkyl (meth)acrylate, preferably, 2-hydroxyethyl methacrylate, 2-hydroxypropyl (meth)acrylate, or mixtures thereof when the copolymer is the copolymerization product of (iii) one or more monomers consisting of amides of a,β-unsaturated C₃ to C₆ carboxylic acids.

Suitable aqueous emulsion copolymers of component A) of the present invention having a measured glass transition temperature (T_{g}) of from -40 to 20°C, preferably, -35 to 10°C. Glass transition temperatures can be tailored by monomer selection of monomers that give harder and softer polymers, as is known in the art.

The aqueous emulsion copolymers of the present invention may be made by conventional aqueous emulsion polymerization of free radically polymerizable monomers in the presence of an aqueous initiator or redox pair, as is conventional in the art. Such aqueous emulsion copolymerization may comprise, for example, gradual addition copolymerization of a reaction medium comprising a monomer mixture, water, and one or more emulsifier and/or surfactant, is fed into a polymerization vessel and is polymerized in the presence of initiator or redox pair.

Seed polymerization methods may be used, such as, for example, those in which a portion of the monomer mixture, e.g. 5 to 15 wt.% of the total monomer mixture, is shot polymerized to form a seed polymer, followed by gradual addition polymerization of the remainder of the monomer mixture.

Conventional free radical initiators may be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01 to 3.0 wt.%, or, preferably, from 0.05 to 0.5 wt.%, based on total monomer solids. Redox pairs using the above initiators coupled with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, lactic acid, glyceric acid, malic acid, tartaric acid and salts of the preceding acids may be used.

Preferably, to insure fast curing compositions, provide sufficient pot life and form a flexible waterproofing membrane, the methods of making the aqueous emulsion copolymer of the present invention comprise copolymerizing the monomers to make the copolymer, followed by feeding or combining the copolymer with an ascorbic acid reducing agent and t-butyl hydroperoxide, i.e. as a chase.

Preferably, the t-butyl hydroperoxide is added as a shot chase, followed by adding the ascorbic acid as a feed chase.

It is assumed that any reducing agents or t-butyl hydroperoxide combined with the aqueous emulsion copolymer are retained in the final aqueous emulsion copolymer as a chemical residue.

Waterproofing membrane fast curing dry mix powder composition component B) generally comprise from 7 to 50 wt.%, for example 30 to 50 wt.% of hydraulic cement, such as ordinary Portland cement, and from 15 to 70 wt.% by weight of non hydraulic or non-cementitious fillers, such as sand. In addition to hydraulic cement, the component B) comprises a high alumina content cement and may further comprise calcium sulfate. Such ingredients are stored as a fast curing dry mix powder composition and are kept dry until use so that they will not react, thereby remaining free as a flowing powder.

In accordance with the present invention, examples of cement or hydraulic binders include for example, one or more conventional, commercially available ordinary Portland cements, and one or more conventional, commercially available high alumina content cements such as commercially available calcium aluminate cements (CAC), such as Ternal W, a CAC with an alumina content of approximately 70% by weight, produced by Kerneos SA, France, and calcium sulfoaluminate cements (CSA), such as produced by Tangshan Polar Bear Cement Company, Ltd, Hebei Province, China.

The high alumina content cement of the present invention, such as calcium aluminate cement, has an alumina (Al₂O₃) content of greater than 30 wt.%, or, preferably greater than 40 wt.%, more preferably greater than 55 wt.%, most preferably at least 70 wt.%, based upon the weight of the high alumina content cement, such as calcium aluminate cement.

Suitable sources or forms of calcium sulfate include anhydrite or gypsum, setting forms (hemi-hydrate), and drying forms (dihydrate), and mixtures thereof.

The fast curing dry mix powder composition of the present invention forms a calcium sulfoaluminate cement. The fast dry materials may comprise a mixture of calcium sulfate, gypsum or anhydrite and high alumina content cement with an alumina (Al₂O₃) content of greater than 30% by weight, as clinker, and fillers such as added limestone.

In accordance with the present invention, the fast curing dry mix powder composition component B) may also include fillers. Fillers may comprise as much as Examples of fillers include, for example, sand such as silica sand and quartz sand, quartz flour, calcium carbonate, dolomite, aluminum silicates, talc or mica, or light weight fillers such as pumice, foamed glass, aerated concrete, perlites or vermiculites. Mixtures of the fillers may also be included.

Fillers may comprise as much as 60 wt.% of the total solids of the two-component compositions or of the final waterproofing membrane.

The fast curing dry mix powder composition composition of component B) may include other conventional additives in conventional amounts, such as, for example, alkali metal hydroxide and/or alkaline earth metal hydroxide selected from the group consisting of zinc oxide, zinc hydroxide, and zinc hydroxide carbonate; one or more thickener in powder form such as a cellulose ether, such as hydroxyethyl methyl cellulose, or a gum.

Suitable amounts of thickeners may range from 0.01 to 1 wt.%, or, preferably, from 0.01 to 0.5 wt.% of the total solids of the component B) fast curing dry mix powder composition.

In the two-component compositions of the present invention, the weight ratio of polymer solids to total cement solids (Portland cement plus high alumina content cement) may range from 0.4:1 to 2.5:1, or, preferably, from 0.5:1 to 1.5:1

In another aspect of the present invention, methods of making a waterproofing membrane comprise (1) providing the two-component composition of the present invention, (2) mixing it with water, (3) applying to the substrate and drying.

The consistency of a cement composition is adjusted by the water added to the dry mix powder. The water may be added in such an amount to achieve a desired consistency according to end-use requirements.

A suitable water to cement (hydraulic cement plus high alumina content cement) ratio my range from 0.45:1 to 0.6:1 .

The composition may be used in products for construction industry and can be used in or to make skim coats, crack isolation membranes, sealing slurries or repair mortars, and as basecoats in exterior insulation finishing systems (EIFS).

Examples of suitable substrates include, for example, a recently hardened waterproofing membrane, plywood, backerboard, water tank, basements, insulation panels, interior wall surfaces, steel reinforcement, aged concrete, hardened concrete, aged mortar, hardened mortar, or a soundproofing panel.

EXAMPLES: The following examples are provided for illustrative purposes only and are not intended to limit the scope of the claims that follow.

Unless otherwise indicated, all parts and percentages are by weight, all temperatures are at room temperature (RT), and all pressures are at standard pressure.

### Synthesis Example 1: Making the aqueous emulsion copolymer in Example 1:

A multi-neck reaction flask was charged with 600 g deionized (DI) water. The necks were set up to accommodate an overhead mechanical stirrer, a nitrogen inlet, a thermocouple, a condenser, and two inlets for the addition of reactants via pump. A monomer emulsion of 397g water, 35.9 g FES 993 (sodium lauryl ethoxy (EO) ether sulfate, 12 EO Units, BASF SE, Ludwigshafen, DE), 26.2 g Tergitol 15-S-40(secondary alcohol ethoxylate - 40 EO units, 70 wt.% in water, The Dow Chemical Company, Midland, MI), and a monomer mixture of 1542 g butyl acrylate (BA), 282 g styrene (STY), 35.5 g acrylamide (AM), and 9.31 g 2-hydroxyethyl methacrylate (HEMA) was prepared.

The reaction flask was heated to 88 to 94 °C before 54.7 g of a 9% sodium bicarbonate solution, 94.7 g of the monomer emulsion, and 20 g of 9% sodium persulfate solution in water were added to the flask. After the resulting exotherm, the remainder of the monomer emulsion and 120 g of a 4.9 wt.% solution of sodium persulfate in water were added over a period of 180 min while maintaining a temperature of 87 to 92 °C preferably 90°C. After the end of feeds, the reaction was held at 80 to 90 °C for approximately 30 min before being cooled to 73 to 77 °C. Then 14.8 g of 6.2 wt.% t-butyl hydrogen peroxide solution in water and 14.6 g of 4.6 wt.% sodium bisulfite solution in water were added to the flask as a shot chase. The reaction was hold at 75°C for 15 min and then was cooled to 60 °C. 53 g of 18.4 wt.% t-butyl hydrogen peroxide and 59.8 g of 11.2 wt.% isoascorbic acid solutions in water were added via pump over 1 hour (h). The product of the reaction had solids content ranging from 55 to 58% and a pH below 5. The chase package with mol ratio of oxidant (tert-Butyl hydrogen peroxide, t-BHP) to reductant (Isoascorbic acid) more than 1:1 preferably, from 1:1 to 2.5:1 was used. The molar mass of isoascorbic acid is 176.1g/mol. Molar mass of tert-Butyl hydrogenperoxide is 90.1g/mol.

### Synthesis Example 2: Making the aqueous emulsion copolymer of Example 2

The copolymer was made in the manner disclosed Synthesis Example 1, except that the monomer mixture was used as stated in Table 1 below

### Synthesis Example 3: Making the aqueous emulsion copolymer of Example 3

The copolymer was made in the manner disclosed Synthesis Example 1, except that the chase package with the mol ratio of oxidant (tert-Butyl hydrogenperoxide, t-BHP) to isoascorbic acid) equal to 1 was used as stated in Table 1 below.

### Aqueous emulsion copolymers of Comparative Examples 1 and 2

The aqueous emulsion copolymer having the monomer mixture and reagents as listed in Table 1, below, was made by single stage gradual addition emulsion polymerization in the presence of an acrylic emulsion polymer seed, an anionic surfactant and a 15% sodium persulfate solution in water. The emulsion copolymer was cooled to 60 to 70°C and then residual monomers were chased through the addition of the indicated oxidants and reductants.

In Comparative Example 2, the chase comprised addition of an aqueous solution containing 3 wt% t-butyl hydrogen peroxide and 0.5 wt% hydrogen peroxide and, in parallel, a 4 wt% solution of isoascorbic acid to the flask over a period of 0.75 to 1 hour. The final mixture had solids content ranging from 50 to 55% and a pH of above 5. Table 2, below, discloses the fast curing dry mix powder composition formulations used in the Examples.

The amount of tetrahydrofuran insoluble content in both comparative and inventive aqueous emulsion copolymers, as determined gravimetrically and compared using size exlusion chromatography (SEC), as defined above. Table 1, below, reports various properties of the aqueous emulsion copolymer.

**Table 1. Emulsion Polymer Compositions**

| **Aqueous Emulsion Copolymer** | | **Example 1** (Tg -23 °C) | **Example 2** (Tg 12°C) | **Comp Example 3** | **Comp 1*** | **Comp 2*** |
|---|---|---|---|---|---|---|
| **Monomers** | | | | | | |
| | **Butyl acrylate** | 82.5 | 70 | 82.5 | 70 | 82.5 |
| | **Styrene** | 15.1 | 28.3 | 15.1 | 28.3 | 15.1 |
| | **Acrylamide** | 1.9 | 1.95 | 1.9 | 1.95 | 1.9 |
| | **2-hydroxyethyl methacrylate** | 0.5 | 0.5 | 0.5 | 0.5 | 0.5 |
| **Surfactants** | | | | | | |
| | **FES 993 (sodium lauryl ether sulfate** - **12 EO Units)** | 0.54 | 0.54 | 0.54 | 0.54 | 0.54 |
| | **Tergitol 15-S-40** | 0.98 | 0.98 | 0.98 | 0.49 | 0.49 |
| **Chase Package** | | | | | | |
| | **Sodium bisulfite** | 0.04 | 0.04 | 0.04 | 0.21 | 0.21 |
| | **Isoascorbic acid** | 0.36 | 0.36 | 0.36 | 0 | 0.14 |
| | **t-Butyl hydroperoxide** | 0.4 | 0.4 | 0.18 | 0.15 | 0.36 |
| **Properties¹** | | | | | | |
| **Measured Tg (°C)** | | -30.3 | -11.8 | ~ -30 | -12.6 | ~ -30 |
| **Residual Monomers** | | | | | | - |
| | **Butyl acrylate** | 3 ppm | 4 ppm | 31 ppm | 240 ppm | 4894 ppm |
| | **Styrene** | 1 ppm | 16 ppm | 0.7 ppm | 2 ppm | 33 ppm |
| | **Acrylamide** | 0.2 ppm | 1 ppm | 64 ppm | 1 ppm | 635 ppm |
| **% THF1 Insoluble Content** | | 78 % | 57% | 66 % | 23 % | 54 % |

| | | | | | | |
|---|---|---|---|---|---|---|
| 1. THF = tetrahydrofuran; 2. For all properties with ranges given in the Comparative Examples, the ranges given are target values for the emulsion polymers which the inventors used; no measurements were taken for these polymers. Amounts are %BOM (based on monomers) | | | | | | |

As shown in Table 1, above, the inventive copolymers have a much lower residual monomer content, especially in acrylamide, than do the comparatives. Also, the inventive polymers have a much higher tetrahydrofuran insoluble content.

To formulate the waterproofing membrane compositions or mortars, 40 weight parts active content of the aqueous emulsion copolymer indicated in Table 1, above, as solids, and 100 weight parts fast curing dry mix powder composition solids as indicated in Table 2, below, were combined with 32 weight parts water (from wet aqueous emulsion copolymer plus additional water as needed, as described below). Test results are reported in Table 3, below.

**Table 2: Fast Cure Dry Mix Formulation**

| FAST DRY MIX Ingredients | **Wt.%** % |
|---|---|
| Ordinary Portland Cement (OPC CEM I 42.5R¹) | 25.30 |
| Calcium Aluminate Cement (CAC Ternal^{™,2} RG) | 12.00 |
| Snow White^{™,3} filler (CaSO₄) | 2.70 |
| Quarzsand^{™,4} F32 (average PS 0.24 mm) | 36.40 |
| Quarzsand^{™,4} F36 (average PS 0.16 mm) | 23.45 |
| WALOCEL^{™,5} MKX 6000 PF01 | 0.15 |

| | |
|---|---|
| 1. OPC CEM I 42.5R ( From Heidelberger, Germany) ;OPC CEM I= Ordinary Portland Cement type I Comprising Portland Cement and up to 5% of minor additional constituents. 42.5R - Compressive strength > 42.5 after 28d; 2. CAC Ternal RG Kerneos SA, France (Calcium Aluminate Cement clinker >99.5 wt.%); 3. Snow White Filler, USG, CaSO4 >97.68%; 4. Quarzsand FH 32/FH36, Quarzwerke GmbH, Germany; 5. Walocel MKX 6000 PF 01 Hydroxyethyl methyl cellulose (HEMC) thickener powder giving a viscosity of 60000 cps (Haake, 2.55 reciprocal seconds) in a 2 wt% solution in water at room temperature (Dow Chemical, Midland MI); 6. Arbocel PWC 500, J. RETTENMAIER & SÖHNE GMBH + CO, Germany. Natural cellulose fibers; 7. Finntalc M15, MONDO MINERALS B.V. Netherlands, Mg-silicate. | |

To form the fast curing dry mix powder composition component, the cement, sand and thickener were weighed and placed into a plastic (polyethylene) bag and then hand mixed for 2 minutes and conditioned at room temp (23°C) for 24 hrs. After 24 hours, the aqueous emulsion copolymer component was prepared by adding the indicated amount of water into a 2 I polyethylene beaker and stirring for 30 seconds at 200 rpm with a 4-wing stirrer (diameter: 75 mm). Then, fast curing dry mix powder component was added within 45s to the wet component. Stirrer speed was increased continuously from 200 up to 750 rpm to have a good vortex in the mass. After combining all components, the paste was stirred for additional 135s at 750 rpm to form a mortar.

After stirring was finished, if needed, a waterproofing membrane was formed from the mortar, as set forth in the test methods below.

### TEST METHODS

Appearance (including cracks): A waterproofing membrane was formed by planing the indicated mortar material with a smoothing trowel to cover the area bounded by two 200 mm × 10 mm × 2.6 mm thick metal slats fixed on opposite (widthwise) sides of a continuous polytetraflouroethylene film substrate (Bytac^{™} VF-81, SPI Supplies, West Chester, PA) resting on a 300 × 250mm × 10mm thick poly(vinyl chloride) plate support. Each membrane was dried, the two slats removed, and the membranes were carefully removed from the film substrate after 2 days. The membranes were inspected for the number and appearance of small cracks (<5mm long), large cracks (>5mm long), deep cracks and overall appearance. The film substrate was inspected for cracks that might get reproduced in the waterproofing membrane coated on the substrate so that there were no cracks in the substrate film that would influence the tensile test.

Elongation/ Tensile Strength: (DIN ISO EN 527-1 and DIN ISO EN 527-2, March, 2010) 2.6 mm thick membranes of each indicated material were made as described in the Appearance test, above. The specimens cured under conditions of 7 days storage at 23°C/50% rel. humidity (RH), 7 days storage at 23°C (RT) /50% RH followed by 7 days at 23°C under water and 28 days at 23°C (RT) /50% RH (7 days followed by 21 more days). After the 7 day RT cure, each of the cured membranes was then cut into twenty onedumbbell shape specimens each having dimensions of (14 mm)/twenty one (21mm), according to DIN ISO EN 527-2, type 1B (80 mm L × 15 mm W with a narrow center section that is 10 mm W and 20 mm L). Seven (7) specimens of each cured membrane were tested immediately; seven (7) specimens of each cured membrane were cured 7 days under water at RT and then tested. Another seven (7) specimens were cured 21 more days at RT and 50%RH. To test, for each specimen thickness and width was measured at the thin part of the specimen 3 times for calculation of the sectional area before elongation. Elongation and tensile tests were run in a texture analyzer (TA.XT.plus Texture Analyser, Winopal Forschungsbedarf GmbH, Ahnsbeck, DE) at a speed of 20 mm/min and controlled via computer. Each specimen was fixed in the two clamps of texture analyser (60 mm distance between clamps). Measured was the distance between the clamps over time with the corresponding force needed to elongate the specimen elongated. The readings taken were maximum force; distance at maximum force and the distance at break (the distance at 50% max. force before break was taken, as this could be easy detected). From these readings, the percent elongation and maximum tensile strength, elongation at break and e-modulus or slope of the curve plotted as tensile strength vs. elongation were calculated. Reported values for each indicated material was the average of the seven (7) results calculated from readings for each specimen tested.

Acceptable tensile strength (28d) is ≥ 0.4 N/mm² (MPa); Acceptable Elongation (28d) is ≥ 8%.

Crack Bridging: According to EN 14891 (March, 2010). For each indicated mortar, concrete specimens (160 × 50 × 12 mm) were made from a mix of 28.9wt.% CEM I 52.5R, 57.8wt.% quartz sand F36, 0.3wt.% superplasticiser (Glenium^{™} 51, BASF, Ludwigshafen, DE) and 13wt.% water and cured 2 days at 23°C/50% rel. humidity and 26 days under water at 23°C. Once the concrete specimens were cured, each indicated freshly prepared mortar was applied to one concrete specimen using a metal frame of 3 mm thickness to one of the 160 × 50 mm sides of the specimen and allowed to dry for 4h. Then, each freshly prepared mortar was applied to the other side of the specimen on which the same mortar had been applied using the same frame. Each specimen was cured 7 days at 23°C/50% rel. humidity. After curing, each cured specimen was broken carefully according to EN 14891 (March, 2010) without destroying the membrane. The broken concrete specimen with the intact membrane was elongated with the texture analyzer at a speed of 0.15 mm/min, and the surface of the membrane was monitored visually. The reported distance was (1) at maximum force (2) when the first cracks appear. Additionally the maximum force was reported. An acceptable result is ≥ 0.75 mm.

Density: Immediately after mixing, mortars were placed into a 100 ml steel beaker container of known volume and weight (inside diameter: 54 mm, height: (inside): 43.7 mm, wall thickness: 1.6 mm), tamped down, and then weighed. Density of the mortar is the weight divided by the volume of the mortar.

Time needed to apply second layer: The indicated freshly prepared mortar was applied at 1.3 mm thickness in one layer onto a lime stone brick. By a finger tip test every 5 min the freshness of the membrane was checked. When the membrane is set to the finger tip it is possible to apply a second layer and this time was recorded.

Water Impermeability: According to EN 12390-8 (March, 2010) A hole was drilled in a lime stone brick on the obverse side of the testing surface (nearly piercing ~ 1cm away from the testing surface). The indicated freshly made mortar was applied at 1.3 mm thickness in one layer on the lime stone brick. After 4h a second layer of a freshly made mortar was applied at an added 1.3mm on the first layer and allowed to dry for 7 days at 23°C and 50% rel. humidity. A water indication paper (Wator 90610, Macherey-Nagel, Dueren, DE) was put into the drilled hole and then the membrane with the lime stone was put into the water impermeability tester (supplier: TESTING Bluhm & Feuerherdt GmbH, Berlin, DE) and a hydrostatic pressure of 1.5 bars was put on the membrane for 4 days. If the water absorption was less than 25ml the pressure was raised up to 5 bars for 3 days. If the absorption was higher the pressure was held additional 3 days at 1.5 bar. After the 7 days the water indication paper was checked. The test is passed if no humidity is seen underneath the membrane. In parallel the water loss over time was read from the calibrated cylinder of the water impermeability tester. In most cases, the membrane is water impermeable if water loss is below 30 ml after 7 days exposure.

Water Absorption: The indicated freshly prepared membrane mortar was applied at 2.6 mm thickness in one layer onto a polytetrafluoroethylene film (supported by a PVC or glass plate) to form a wet membrane. The membrane was allowed to cure for 7 days at 23°C / 50% rel. humidity. After curing, 5 pieces of 5x5 cm size were cut out of the membrane, weighed and immersed in water. After 1 and 7 days, the specimens were taken out of the water, the surface of each specimen was carefully dried with a tissue and the specimens were weighed. The water uptake in percent is calculated as the ratio of weight increase divided by the weight before immersing. Less than 5% after 24h and less than 10% after 7days is acceptable.

W/S: Water to solid ratio (W/S) ratio is calculated by taking the ratio of total amount of water to the total amount of solids coming from the emulsion copolymer and drymix.

Table 3, below, gives test results for each indicated mortar or membrane.

As shown in Table 3, below, inventive Examples 2 show that a second mortar layer can be applied in 45 min or less to the first applied layer. The Comparative Example 1 mortar creates cracks as it cures, whereas the mortars of inventive Example 2 does not crack as it cures. The water permeable membrane having the inventive polymer of Example 2 provides superior elongation at max force and rupture, as well as maximum force in comparison to the same composition made with the polymer of Comparative Example 1 which was not made with the inventive amount of t-butyl hydroperoxide or with a greater amount of t-butyl hydroperoxide than reducing agent. Finally, the membranes made from the mortars of Example 2 exhibits dramatically improved crack bridging when compared to Comparative Example 1, both in terms of deformation at maximum force and at rupture.

**Table 3: Results**

| **TEST** | **Ex 2** | | **Comp 1*** | | **COMP 2*** | | **Ex 1** | |
|---|---|---|---|---|---|---|---|---|
| **Water/Solids** | | 0.219 | | 0.256 | | 0.226 | | 0.229 |
| **Density (g/cm³) (immediate)** | | 1.39 | | 1.10 | | 1.37 | | 1.35 |
| **Time needed to apply second layer (min)** | | 45 | | 35 | | 80 | | 80 |
| **Appearance** | slightly rough, but nice and even surface front and backside is shiny | | white spotty | | nice even surface but very soft, few lumbs moderate rough | | slightly rough, but nice and even surface front & backside is shiny, slightly sticky after 7 days | |
| **Cracks** | | | | | | | | |
| **polytetrafluoroethylene** | | no | like dry river bed | | no | | no | |
| **limestone** | | no | | ok | | no | | no |
| **Water Absorption (5×5 cm 7d NK+ (%)** | | | | | | | | |
| **after 1 day water storage** | | 3.5 | | 13.9 | | 5.4 | | 5.4 |
| **after** 7 **days water storage** | | 8.5 | | 20.5 | | 13.1 | | 13.4 |
| **Remark after 7 days H₂O** | | clear | | clear | | clear | | clear |
| **Elongation (water immersion, 7d at RT and 50% RH/ 7dH₂O)** | | | | | | | | |
| **tensile strength (max force, N/mm²)** | | 1.11 | | No | | 0.46 | | 0.71 |
| **average elongation** % **at max. force** | | 106.5 | | No | | 66.1 | | 66 |
| **average elongation % at rupture** | | 129 | n/a | 87.8 | 74 | | | |
| **Elongation (@ -20°C)** | | | | | | | | |
| **tensile strength (max force, N/mm²)** | | n/a | n/a | 3.27 | 2.47 | | | |
| **average elongation % at max. force** | | n/a | n/a | 41 | 65 | | | |
| **average elongation** % **at rupture** | | n/a | n/a | 46.9 | 74 | | | |
| **Crack Bridging (after 7days at RT and 50% RH)** | | | | | | | | |
| **max force (N)** | | 125 | 64 | 75 | 88 | | | |
| **deformation at max force (mm)** | | 2.84 | 0.93 | 1.21 | 1.58 | | | |
| **deformation at rupture(mm)** | | 6.47 | 1.86 | 2.67 | 3.22 | | | |

| | | | | | | | | |
|---|---|---|---|---|---|---|---|---|
| * Comparative Example. | | | | | | | | |

## Claims

1. A two-component composition for making a waterproofing membrane comprising as one component A) one or more aqueous emulsion copolymer having a residual (meth)acrylamide content of less than 40 ppm, and, as a separate component B), a fast curing dry mix powder composition of a hydraulic cement and a high alumina content cement, wherein at least one of the one or more aqueous emulsion copolymers in component A) is the copolymerization product of (i) from 60 to 89.9 wt.% of one or more nonionic (meth)acrylic monomers, (ii) from 10 to 40 wt.% of one or more vinyl aromatic monomers, (iii) from 0.1 to 3 wt.% of one or more monomers chosen from, amides of a,β-unsaturated C₃ to C₆ carboxylic acids and mixtures thereof with itaconic acid or methacrylic acid, all wt.%s of monomers based on the total monomer solids used to make the aqueous emulsion copolymer, wherein after the copolymerization, t-butyl hydroperoxide and a reducing agent are charged into the aqueous emulsion copolymer and, then an ascorbic acid reducing agent is fed into the composition, and the aqueous emulsion copolymer has a residue of an ascorbic acid reducing agent and a residue of t-butyl hydroperoxide, wherein, the mole ratio of t-butyl hydroperoxide to ascorbic acid reducing agent that are charged into the aqueous emulsion copolymer ranges from greater than 1.0:1 to 3.0:1.

2. The two-component composition as claimed in claim 1, wherein in at least one of the one or more aqueous emulsion copolymer of component A), the mole ratio of t-butyl hydroperoxide to ascorbic acid reducing agent that are charged into the aqueous emulsion copolymer ranges from greater than 1.0:1 to 2.5:1.

3. The two-component composition as claimed in claim 1, wherein at least one of the one or more aqueous emulsion copolymer of component A) has a residual (meth)acrylamide content of less than 20 ppm.

4. The two-component composition as claimed in claim 1, wherein at least one of the one or more aqueous emulsion copolymer of component A) has a tetrahydrofuran insoluble content of from 45 to 90 wt.%.

5. The two-component composition as claimed in claim 1, wherein at least one of the one or more aqueous emulsion copolymer of component A) comprises the copolymerization product of (i) one or more nonionic (meth)acrylic monomers chosen from butyl acrylate, ethyl acrylate 2-ethylhexyl acrylate, fatty C₁₂ to C₁₈ (meth)acrylates, and mixtures thereof.

6. The two-component composition as claimed in claim 1, wherein at least one of the one or more aqueous emulsion copolymer of component A) comprises the copolymerization product of one or more monomers (i), (ii), (iii) and, in addition, (iv) one or more hydroxyalkyl (meth)acrylate monomers.

7. The two-component composition as claimed in claim 6, wherein in at least one of the one or more aqueous emulsion copolymer of component A), comprises the copolymerization product of from 0.1 to 1.5 wt.% of (iv) one or more hydroxyalkyl (meth)acrylate, all wt.%s of monomers based on total monomer solids.

8. The two-component composition as claimed in claim 1, wherein in at least one of the one or more aqueous emulsion copolymer of component A) comprises the copolymerization product of (ii) one or more vinyl aromatic monomers chosen from styrene, alkyl substituted styrene, vinyl toluene and mixtures thereof.

9. The two-component composition as claimed in claim 1, wherein in at least one of the one or more aqueous emulsion copolymer of component A), the t-butyl hydroperoxide is charged in an amount of from 0.2 to 2.5 wt.% or the ascorbic acid reducing agent is charged in an amount of from 0.1 to 1.0 wt.%, all amounts as solids based on the total monomer solids used to make the aqueous emulsion copolymer.

10. The two-component composition as claimed in any one of claims 1 to 9 comprising from 10 to 60 wt.%, as solids, of the one or more aqueous emulsion copolymer of component A), based on the total solids content of the composition.

11. A method of making an aqueous emulsion copolymer of component A) having a residual (meth)acrylamide content of less than 40 ppm, preferably, less than 20 ppm comprising addition polymerizing, preferably, gradual addition polymerizing, a reaction medium of a monomer mixture of (i) from 60 to 89.9 wt.% of one or more nonionic (meth)acrylic monomers, (ii) from 10 to 40 wt.% of one or more vinyl aromatic monomers, (iii) from 0.1 to 3 wt.% or, preferably, of one or more monomers chosen from amides of a,β-unsaturated C₃ to C₆ carboxylic acids and mixtures thereof with itaconic acid or methacrylic acid, all wt.%s of monomers based on the total monomer solids used to make the monomer emulsion, in the presence of an initiator or a redox pair, thereby creating an exotherm and raising for a time period the temperature of the reaction medium to form an aqueous emulsion copolymer composition, after the reaction is complete and the temperature of the reaction medium stops rising, charging to the aqueous emulsion copolymer composition t-butyl hydroperoxide and a reducing agent, and, then feeding to the composition an ascorbic acid reducing agent, wherein the amount of the ascorbic acid reducing agent ranges from 0.1 to 1.0 wt.%, based on the total monomer solids used to make the aqueous emulsion copolymer, and the amount of the t-butyl hydroperoxide ranges from 0.2 to 2.5 wt.%, based on the total monomer solids used to make the aqueous emulsion copolymer, and wherein the mole ratio of t-butyl hydroperoxide to ascorbic acid reducing agent that are charged into the aqueous emulsion copolymer ranges from greater than 1.0:1 to 3.0:1.

## Patentansprüche

1. Eine Zweikomponenten-Zusammensetzung zur Herstellung einer wasserdichten Membran, beinhaltend als eine Komponente A) ein oder mehrere Copolymere in wässriger Emulsion mit einem Restgehalt an (Meth)acrylamid von weniger als 40 ppm und, als separate Komponente B), eine schnell härtende Trockenmischungspulverzusammensetzung aus einem hydraulischen Zement und einem Zement mit hohem Aluminiumoxidgehalt, wobei mindestens eines des einen oder der mehreren Copolymere in wässriger Emulsion in Komponente A) das Copolymerisationsprodukt von Folgendem ist: (i) zu 60 bis 89,9 Gew.-% einem oder mehreren nichtionischen (Meth)acrylmonomeren, (ii) zu 10 bis 40 Gew.-% einem oder mehreren vinylaromatischen Monomeren, (iii) zu 0,1 bis 3 Gew.-% einem oder mehreren Monomeren, ausgewählt aus Amiden von α,β-ungesättigten C₃- bis C₆-Carbonsäuren und Mischungen davon mit Itaconsäure oder Methacrylsäure, wobei sich alle Gew.-% der Monomere auf die gesamten Monomerfeststoffe beziehen, die zur Herstellung des Copolymers in wässriger Emulsion verwendet werden, wobei nach der Copolymerisation t-Butylhydroperoxid und ein Reduktionsmittel in das Copolymer in wässriger Emulsion eingebracht werden und dann ein Ascorbinsäure-Reduktionsmittel in die Zusammensetzung eingespeist wird und das Copolymer in wässriger Emulsion einen Rest eines Ascorbinsäure-Reduktionsmittels und einen Rest von t-Butylhydroperoxid aufweist, wobei das Molverhältnis von dem t-Butylhydroperoxid zu dem Ascorbinsäure-Reduktionsmittel, die in das Copolymer in wässriger Emulsion eingebracht werden, im Bereich von mehr als 1,0 : 1 bis 3,0 : 1 liegt.

2. Zweikomponenten-Zusammensetzung gemäß Anspruch 1, wobei in mindestens einem von dem einen oder den mehreren Copolymeren in wässriger Emulsion der Komponente A) das Molverhältnis von dem t-Butylhydroperoxid zu dem Ascorbinsäure-Reduktionsmittel, die in das Copolymer in wässriger Emulsion eingebracht werden, im Bereich von mehr als 1,0 : 1 bis 2,5 : 1 liegt.

3. Zweikomponenten-Zusammensetzung gemäß Anspruch 1, wobei mindestens eines von dem einen oder den mehreren Copolymeren in wässriger Emulsion der Komponente A) einen Restgehalt an (Meth)acrylamid von weniger als 20 ppm aufweist.

4. Zweikomponenten-Zusammensetzung gemäß Anspruch 1, wobei mindestens eines von dem einen oder den mehreren Copolymeren in wässriger Emulsion der Komponente A) einen in Tetrahydrofuran unlöslichen Gehalt von 45 bis 90 Gew.-% aufweist.

5. Zweikomponenten-Zusammensetzung gemäß Anspruch 1, wobei mindestens eines von dem einen oder den mehreren Copolymeren in wässriger Emulsion der Komponente A) das Copolymerisationsprodukt von (i) einem oder mehreren nichtionischen (Meth)acrylmonomeren, ausgewählt aus Butylacrylat, Ethylacrylat 2-Ethylhexylacrylat, fettigen C₁₂- bis C₁₈-(Meth)acrylaten und Mischungen davon, beinhaltet.

6. Zweikomponenten-Zusammensetzung gemäß Anspruch 1, wobei mindestens eines von dem einen oder den mehreren Copolymeren in wässriger Emulsion der Komponente A) das Copolymerisationsprodukt von einem oder mehreren Monomeren (i), (ii), (iii) und, zusätzlich, (iv) einem oder mehreren Hydroxyalkyl(meth)acrylat-Monomeren beinhaltet.

7. Zweikomponenten-Zusammensetzung gemäß Anspruch 6, wobei in mindestens eines von dem einen oder den mehreren Copolymeren in wässriger Emulsion der Komponente A) das Copolymerisationsprodukt von Folgendem beinhaltet: zu 0,1 bis 1,5 Gew.-% (iv) ein oder mehrere Hydroxyalkyl(meth)acrylate, wobei sich alle Gew.-% der Monomere auf die gesamten Monomerfeststoffe beziehen.

8. Zweikomponenten-Zusammensetzung gemäß Anspruch 1, wobei in mindestens eines von dem einen oder den mehreren Copolymeren in wässriger Emulsion der Komponente A) das Copolymerisationsprodukt von (ii) einem oder mehreren vinylaromatischen Monomeren, ausgewählt aus Styrol, alkylsubstituiertem Styrol, Vinyltoluol und Mischungen davon, beinhaltet.

9. Zweikomponenten-Zusammensetzung gemäß Anspruch 1, wobei in mindestens einem von dem einen oder den mehreren Copolymeren in wässriger Emulsion der Komponente A) das t-Butylhydroperoxid in einer Menge von 0,2 bis 2,5 Gew.-% eingebracht wird oder das Ascorbinsäure-Reduktionsmittel in einer Menge von 0,1 bis 1,0 Gew.-% eingebracht wird, wobei sich alle Mengen als Feststoffe auf die gesamten Monomerfeststoffe beziehen, die verwendet werden, um das Copolymer in wässriger Emulsion herzustellen.

10. Zweikomponenten-Zusammensetzung gemäß einem der Ansprüche 1 bis 9, die zu 10 bis 60 Gew.-% als Feststoffe das eine oder die mehreren Copolymere in wässriger Emulsion der Komponente A) beinhaltet, bezogen auf den Gesamtfeststoffgehalt der Zusammensetzung.

11. Ein Verfahren zur Herstellung eines Copolymers in wässriger Emulsion der Komponente A) mit einem Restgehalt an (Meth)acrylamid von weniger als 40 ppm, vorzugsweise weniger als 20 ppm, das Folgendes beinhaltet: Additionspolymerisieren, vorzugsweise allmähliches Additionspolymerisieren, eines Reaktionsmediums einer Monomermischung aus Folgendem: (i) zu 60 bis 89,9 Gew.-% einem oder mehreren nichtionischen (Meth)acrylmonomeren, (ii) zu 10 bis 40 Gew.-% einem oder mehreren vinylaromatischen Monomeren, (iii) zu 0,1 bis 3 Gew.-% oder, vorzugsweise, einem oder mehreren Monomeren, ausgewählt aus Amiden von α,β-ungesättigten C₃- bis C₆-Carbonsäuren und Mischungen davon mit Itaconsäure oder Methacrylsäure, wobei sich alle Gew.-% der Monomere auf die gesamten Monomerfeststoffe beziehen, die zur Herstellung der Monomeremulsion verwendet werden, in Gegenwart eines Initiators oder eines Redoxpaares, wodurch eine Exothermie erzeugt wird und die Temperatur des Reaktionsmediums für einen Zeitraum erhöht wird, um eine Copolymerzusammensetzung in wässriger Emulsion zu bilden, nachdem die Reaktion abgeschlossen ist und die Temperatur des Reaktionsmediums aufhört zu steigen, Einbringen von t-Butylhydroperoxid und einem Reduktionsmittel in die Copolymerzusammensetzung in wässriger Emulsion und dann Einspeisen eines Ascorbinsäure-Reduktionsmittels in die Zusammensetzung, wobei die Menge des Ascorbinsäure-Reduktionsmittels im Bereich von 0,1 bis 1,0 Gew.-%, bezogen auf die gesamten Monomerfeststoffe, die zur Herstellung des Copolymers in wässriger Emulsion verwendet werden, liegt und die Menge des t-Butylhydroperoxids im Bereich von 0,2 bis 2,5 Gew.-%, bezogen auf die gesamten Monomerfeststoffe, die zur Herstellung des Copolymers in wässriger Emulsion verwendet werden, liegt und wobei das Molverhältnis von dem t-Butylhydroperoxid zu dem Ascorbinsäure-Reduktionsmittel, die in das Copolymer in wässriger Emulsion eingebracht werden, im Bereich von mehr als 1,0 : 1 bis 3,0 : 1 liegt.

## Revendications

1. Une composition à deux constituants pour réaliser une membrane d'étanchéité comprenant comme un constituant A) un copolymère en émulsion aqueuse ou plus ayant une teneur en (méth)acrylamide résiduel de moins de 40 ppm, et, comme un constituant distinct B), une composition de mélange sec pulvérulent à durcissement rapide d'un ciment hydraulique et d'un ciment à teneur en alumine élevée, dans laquelle au moins un des un ou plusieurs copolymères en émulsion aqueuse dans le constituant A) est le produit de copolymérisation de (i) 60 à 89,9 % en poids d'un ou de plusieurs monomères (méth)acryliques non ioniques, (ii) de 10 à 40 % en poids d'un ou de plusieurs monomères vinyl aromatiques, (iii) de 0,1 à 3 % en poids d'un ou de plusieurs monomères choisis parmi des amides d'acides carboxyliques en C₃ à C₆ α,β-insaturés et des mélanges de ceux-ci avec de l'acide itaconique ou de l'acide méthacrylique, tous les % en poids de monomères étant rapportés aux solides de monomère totaux utilisés pour réaliser le copolymère en émulsion aqueuse, dans laquelle après la copolymérisation, de l'hydroperoxyde de t-butyle et un agent réducteur sont chargés dans le copolymère en émulsion aqueuse, et ensuite un agent réducteur acide ascorbique est introduit dans la composition, et le copolymère en émulsion aqueuse a un résidu d'un agent réducteur acide ascorbique et un résidu d'hydroperoxyde de t-butyle, dans laquelle, le rapport molaire de l'hydroperoxyde de t-butyle à l'agent réducteur acide ascorbique qui sont chargés dans le copolymère en émulsion aqueuse est compris dans la gamme allant de plus de 1,0/1 à 3,0/1.

2. La composition à deux constituants telle que revendiquée dans la revendication 1, dans laquelle dans au moins un des un copolymère en émulsion aqueuse ou plus du constituant A), le rapport molaire de l'hydroperoxyde de t-butyle à l'agent réducteur acide ascorbique qui sont chargés dans le copolymère en émulsion aqueuse est compris dans la gamme allant de plus de 1,0/1 à 2,5/1.

3. La composition à deux constituants telle que revendiquée dans la revendication 1, dans laquelle au moins un des un copolymère en émulsion aqueuse ou plus du constituant A) a une teneur en (méth)acrylamide résiduel de moins de 20 ppm.

4. La composition à deux constituants telle que revendiquée dans la revendication 1, dans laquelle au moins un des un copolymère en émulsion aqueuse ou plus du constituant A) a une teneur insoluble en tétrahydrofurane allant de 45 à 90 % en poids.

5. La composition à deux constituants telle que revendiquée dans la revendication 1, dans laquelle au moins un des un copolymère en émulsion aqueuse ou plus du constituant A) comprend le produit de copolymérisation de (i) un ou plusieurs monomères (méth)acryliques non ioniques choisis parmi l'acrylate de butyle, l'acrylate d'éthyle l'acrylate de 2-éthylhexyle, les (méth)acrylates en C₁₂ à C₁₈ gras, et des mélanges de ceux-ci.

6. La composition à deux constituants telle que revendiquée dans la revendication 1, dans laquelle au moins un des un copolymère en émulsion aqueuse ou plus du constituant A) comprend le produit de copolymérisation d'un ou de plusieurs monomères (i), (ii), (iii) et, de plus, (iv) un ou plusieurs monomères (méth)acrylates d'hydroxyalkyle.

7. La composition à deux constituants telle que revendiquée dans la revendication 6, dans laquelle dans au moins un des un copolymère en émulsion aqueuse ou plus du constituant A), comprend le produit de copolymérisation allant de 0,1 à 1,5 % en poids de (iv) un (méth)acrylate d'hydroxyalkyle ou plus, tous les % en poids de monomères étant rapportés aux solides de monomère totaux.

8. La composition à deux constituants telle que revendiquée dans la revendication 1, dans laquelle dans au moins un des un copolymère en émulsion aqueuse ou plus du constituant A) comprend le produit de copolymérisation de (ii) un ou plusieurs monomères vinyl aromatiques choisis parmi le styrène, le styrène substitué par un alkyle, le toluène vinylique et des mélanges de ceux-ci.

9. La composition à deux constituants telle que revendiquée dans la revendication 1, dans laquelle dans au moins un des un copolymère en émulsion aqueuse ou plus du constituant A), l'hydroperoxyde de t-butyle est chargé en une quantité allant de 0,2 à 2,5 % en poids ou l'agent réducteur acide ascorbique est chargé en une quantité allant de 0,1 à 1,0 % en poids, toutes les quantités en termes de solides étant rapportées au solides de monomère totaux utilisés pour réaliser le copolymère en émulsion aqueuse.

10. La composition à deux constituants telle que revendiquée dans n'importe laquelle des revendications 1 à 9 comprenant de 10 à 60 % en poids, en termes de solides, des un copolymère en émulsion aqueuse ou plus du constituant A), rapporté à la teneur en solides totale de la composition.

11. Un procédé de réalisation d'un copolymère en émulsion aqueuse du constituant A) ayant une teneur en (méth)acrylamide résiduel de moins de 40 ppm, de préférence, moins de 20 ppm comprenant une polymérisation d'addition, de préférence, une polymérisation d'addition graduelle, d'un milieu de réaction d'un mélange de monomère de (i) 60 à 89,9 % en poids d'un ou de plusieurs monomères (méth)acryliques non ioniques, (ii) de 10 à 40 % en poids d'un ou de plusieurs monomères vinyl aromatiques, (iii) de 0,1 à 3 % en poids ou, de préférence, d'un ou de plusieurs monomères choisis parmi des amides d'acides carboxyliques en C₃ à C₆ α,β-insaturés et des mélanges de ceux-ci avec de l'acide itaconique ou de l'acide méthacrylique, tous les % en poids de monomères étant rapportés aux solides de monomère totaux utilisés pour réaliser l'émulsion de monomère, en présence d'un initiateur ou d'une paire redox, créant de ce fait un exotherme et élevant pendant une période de temps la température du milieu de réaction afin de former une composition de copolymère en émulsion aqueuse, après que la réaction est terminée et que la température du milieu de réaction arrête de s'élever, le chargement sur la composition de copolymère en émulsion aqueuse d'hydroperoxyde de t-butyle et d'un agent réducteur, et ensuite l'introduction à la composition d'un agent réducteur acide ascorbique, dans lequel la quantité de l'agent réducteur acide ascorbique est comprise dans la gamme allant de 0,1 à 1,0 % en poids, rapporté aux solides de monomère totaux utilisés pour réaliser le copolymère en émulsion aqueuse, et la quantité de l'hydroperoxyde de t-butyle est comprise dans la gamme allant de 0,2 à 2,5 % en poids, rapporté au solides de monomère totaux utilisés pour réaliser le copolymère en émulsion aqueuse, et dans lequel le rapport molaire de l'hydroperoxyde de t-butyle à l'agent réducteur acide ascorbique qui sont chargés dans le copolymère en émulsion aqueuse est compris dans la gamme allant de plus de 1,0/1 à 3,0/1.
